(19) **Europäisches Patentamt**
**European Patent Office**
**Office européen des brevets**

(11) **EP 4 079 562 A1**

(12) **EUROPEAN PATENT APPLICATION**

(43) Date of publication:
**26.10.2022 Bulletin 2022/43**

(21) Application number: **21169120.9**

(22) Date of filing: **19.04.2021**

(51) International Patent Classification (IPC):
**B60L 9/00** $^{(2019.01)}$    **B60L 9/04** $^{(2006.01)}$
**B60L 9/18** $^{(2006.01)}$    **H02M 1/14** $^{(2006.01)}$

(52) Cooperative Patent Classification (CPC):
**B60L 9/005; B60L 9/04; B60L 9/18; H02M 1/008; H02M 1/15**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• **BOILLAT, David**
**5246 Scherz (CH)**
• **ARNOLD, Rinaldo**
**8962 Bergdietikon (CH)**
• **WICKI, Stefan**
**5702 Niederlenz (CH)**

(74) Representative: **Qip Patentanwälte**
**Dr. Kuehn & Partner mbB**
**Goethestraße 8**
**80336 München (DE)**

(54) **METHOD AND CONTROLLER FOR CONTROLLING A VEHICLE, COMPUTER PROGRAM, AND COMPUTER-READABLE MEDIUM**

(57) A Method and a controller for controlling a vehicle (20), e.g. a DC vehicle, are provided. The vehicle (20) comprises a current collector/pantograph (24) for receiving a main voltage ($V_L$) and a corresponding main current (IL) from a main voltage provider (22), an input filter (25) connected to the current collector/pantograph (24) and containing a filter element (26) and a DC-link (28) for filtering the main current (IL) and the main voltage ($V_L$) in order to provide a DC-link voltage ($V_D$), at least one load (34) connected to the DC-link (28), and the controller being coupled to the current collector (24), the DC-link (28), and the load (34). The method comprises receiving a current signal (IS), which is representative for the main current ($I_L$), receiving a main voltage signal (VMS), which is representative for the main voltage ($V_L$), receiving a DC-link voltage signal (VDS), which is representative for the DC-link voltage ($V_D$), determining a manipulated signal (MS) depending on the current signal (IS), the main voltage signal (VMS), and the DC-link voltage signal (VDS), and controlling at least the one load (34) such that the load (34) supplies a manipulated current ($I_{mplt}$) depending on the manipulated signal (MS) to the DC-link (28), wherein the manipulated signal (MS) is determined such that in a given frequency range the main current (IL) is controlled to a reference value by the manipulated current ($I_{mplt}$).

FIG. 3

EP 4 079 562 A1

**Description**

FIELD OF THE INVENTION

The invention relates to the field of controlling a vehicle, e.g. a DC vehicle. In particular, the invention relates to a method and a controller for controlling a vehicle, to a computer program for operating the controller, and to a computer-readable medium storing the computer program.

BACKGROUND OF THE INVENTION

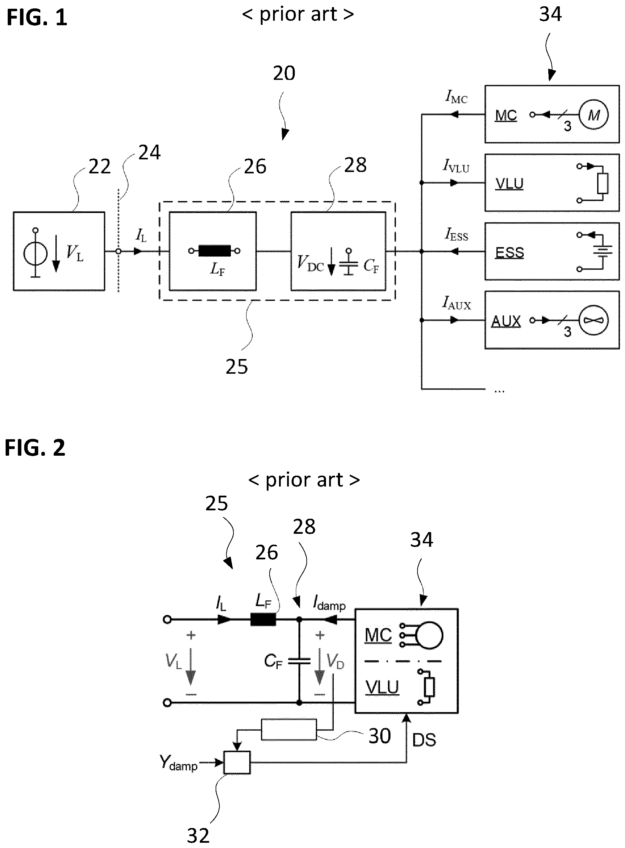

**Fig. 1** shows a conventional vehicle 20, e.g. a DC vehicle. The vehicle 20 is connected to a main voltage provider 22 (e.g. a DC mains) providing a main voltage (e.g. mains voltage) $V_L$ via a current collector/pantograph 24. The current collector 24 may be arranged at a roof, at a bottom or at the sides of the vehicle 20. The vehicle 20 comprises an input filter 25 to filter the main voltage $V_L$ and to provide a filtering of a main current (e.g. mains current) IL, which is drawn from the main voltage provider 22. The input filter 25 may comprise a filter element 26 and a DC-link 28. The filter element 26 may comprise an inductor $L_F$, e.g. a coil, and the DC-link 28 may comprise a DC-link capacitor $C_F$. The DC-link capacitor $C_F$ serves as an energy storage and provides a DC-link voltage $V_D$, which can be seen as the filtered main voltage. It is understood that several filter stages, as described for the input filter 25, can be connected in series to provide the DC-link voltage $V_D$.

Several loads 34 are connected to the DC-link 28, all of them being supplied by the DC-link voltage $V_D$. The loads 34 may comprise a motor converter MC, a voltage limiting unit VLU, an energy storage system ESS, and/or an auxiliary power supply AUX. The motor converter MC impresses a motor converter current $I_{MC}$, the voltage limiting unit VLU draws a voltage limiting current $I_{VLU}$, the energy storage system ESS impresses an energy storage current $I_{ESS}$, and/or the auxiliary power supply AUX draws an auxiliary power supply current $I_{AUX}$ each to or from the DC-link 28.

The motor converter MC, the voltage limiting unit VLU, the energy storage system ESS and the auxiliary power supply AUX all operate on the same DC-link 28. These system loads, by their operation, inject a current into the DC-link 28. The positive direction of an injected current is from the load 34 to the DC-link 28. Accordingly, a negative injected current is a current drawn from the DC-link 28 to the load 34. However, with no loss of generality only the term injected current will be used in the following.

The injected currents from all loads 34 may generate harmonics in the DC-link voltage $V_D$ and/or in the main current IL. The amplitude of these harmonics depends on the impedances of the input filter 25, the main voltage provider 22 and/or the harmonics already contained in the main voltage $V_L$. Especially the amplitudes of the main current harmonics and/or harmonic interference currents calculated from the main current harmonics need, in a certain frequency range Δf, to be compliant to a national, an international and/or a customer defined gabarit. For example, the harmonic amplitudes of the main current IL in the frequency range Δf have to be below specified limits, which may be frequency dependent.

Multiple interference currents violations in a short time may lead to an opening of a main circuit breaker. In the worst case, the main circuit breaker is opening again shortly after being closed, due to interference current violations. Accordingly, the vehicle 20 is shortly out of operation, thereby having an impact on the vehicle availability.

Besides the need for operating the vehicle 20, there is the requirement of compliance to the costumer defined gabarit for the main current IL, i.e. harmonic amplitudes in the frequency range Δf have to be below the specified limits. The compliance is supervised during operation by an interference monitor.

Conventionally, the compliance to the gabarit may be achieved by a conservative design of the input filter 25 such that the interference currents in the frequency range Δf are sufficiently attenuated.

**Fig. 2** shows an alternative conventional approach to obtain attenuation for the main current harmonics. In particular, damping may be added to the DC-link 28. The admittance of the DC-link capacitor CF can be modified to correspond to a emulated damping admittance reference $Y_{damp}$, which provides additional damping to the DC-link 28. This mechanism is often also referred to as impedance resp. admittance emulation. In order to emulate the emulated damping admittance reference $Y_{damp}$, a damping signal DS (e.g. a current) may be fed back to the system through an actuator. The damping signal DS may be determined by measuring the DC-link voltage $V_D$, by filtering the DC-link voltage $V_D$ by a prior art filter 30, and finally by manipulating the correspondingly filtered DC-link voltage $V_D$ by the emulated damping admittance reference $Y_{damp}$ at a first node 32. The actuator may be one of the loads 34 of the vehicle 20, e.g. the motor converter MC, the voltage limiting unit VLU or the auxiliary power supply AUX. The drawbacks of this approach are that only damping is provided, and that the amount of emulated damping may not be enough to sufficiently attenuate the interference current in the frequency range Δf in order to be compliant to the gabarit.

DESCRIPTION OF THE INVENTION

It is an objective of the present invention to provide a method and a controller for controlling a vehicle, e.g. a DC vehicle, a computer program for operating the controller, and a computer-readable medium, in which the computer program is stored, all of which contribute to a reliable and/or continuous operation of the vehicle, in particular in accordance with the compliance to the customer's requirements.

These objectives are achieved by the subject-matter of the independent claims. Further exemplary embodiments are evident from the dependent claims and the following description.

An objective is achieved by a method for controlling a vehicle, e.g. a DC vehicle. The vehicle comprises a current collector/pantograph for receiving a main voltage and a corresponding main current from a main voltage provider, an input filter connected to the current collector/pantograph and containing a DC-link for filtering the main current and the main voltage in order to provide a DC-link voltage, at least one load connected to the DC-link, and a controller coupled to the current collector, the DC-link, and the load. The method comprises: receiving a current signal, which is representative for the main current; receiving a main voltage signal, which is representative for the main voltage; receiving a DC-link voltage signal, which is representative for the DC-link voltage; determining a manipulated signal depending on the current signal, the main voltage signal, and the DC-link voltage signal; and controlling at least the one load such that a manipulated current depending on the manipulated signal is supplied to the DC-link, wherein the manipulated signal is determined such that in a given frequency range the main current is controlled to a reference value by the manipulated current.

Providing the manipulated current depending on the manipulated signal such that the current signal is controlled to the reference value in the given frequency range corresponds to an active damping of the main current by means of control. The method enables the operation of the vehicle by actively suppressing the interference currents and/or current harmonics in the given frequency range (e.g. 0.1Hz - 1MHz, 1Hz - 100kHz, 10Hz - 10kHz) by means of direct control. The quantity to suppress, i.e. the current signal in the given frequency range, is directly controlled to the reference value, e.g. to zero. In other words, the proposed active suppression control scheme directly controls the main current in the given frequency range, e.g. to zero, and allows in this way to attenuate and in case of perfect attenuation to eliminate the inference currents and/or current harmonics in this frequency range by means of control. In other words, in steady-state and under ideal conditions (i.e. ideal measurements, ideal actuator, infinite controller bandwidth, ...), controlling the current signal in the given frequency range to zero corresponds to an active harmonic elimination in the very same frequency range. This solves at least one of the above objectives. In contrast, in the above-described prior art, the suppression is achieved by introducing a damping into the system, without a direct control of the input current (e.g. also without active harmonic elimination).

The current signal, the main voltage signal, and the DC-link voltage signal are each measured signals representing the actual main current, main voltage, and DC-link voltage, respectively. The manipulated current corresponds to the manipulated signal or is determined depending on the manipulated signal. The current signal, the main voltage signal and the DC-link voltage signal are dependent from the actual main current, main voltage, and DC-link voltage, respectively. For example, the current signal, the main voltage signal, and/or the DC-link voltage signal are dependent, e.g. linearly dependent, from the actual main current, main voltage, and DC-link voltage, respectively. Alternatively, the current signal, the main voltage signal, and/or the DC-link voltage signal are identical to the actual main current, main voltage, and/or DC-link voltage, respectively. The manipulated current corresponds to the manipulated signal or is determined depending on the manipulated signal.

According to one or more embodiments, the manipulated current may be generated by applying a manipulated voltage to an impedance, with the manipulated voltage being manipulated in accordance with the manipulated signal and with the impedance being coupled to the DC-link. The impedance may be a part of the load or the input filter. Alternatively, the manipulated current may be generated and/or supplied directly to the DC-link, in particular without the manipulated voltage and/or the impedance.

According to one or more embodiments, the main current is controlled to the reference value in the given frequency range by filtering the current signal, the manipulated current and/or the manipulated signal to the given frequency range. In other words, the main current is measured and the corresponding measured current signal, the manipulated current and/or the manipulated signal are filtered such that the current signal, the manipulated current and/or the manipulated signal, respectively, comprise only the given frequency range for which the interference currents and/or current harmonics need to be attenuated. In addition, the DC-link voltage may be adequately filtered. Each of these measures contribute to the fact that the control scheme is increasingly inactive for frequencies lower and higher than the given frequency range requiring action. For example, a band-pass filter can be used for the filtering of the measured quantities.

According to one or more embodiments, the main voltage signal is filtered and/or the DC-link voltage signal is filtered, wherein the manipulated signal is determined depending on the current signal the filtered main voltage signal, and/or the filtered DC-link voltage signal.

According to one or more embodiments, one, two, three, four or five elements of the group consisting of the current signal, the main voltage signal, the DC-link voltage signal, the manipulated current and/or the manipulated signal, are filtered by a low-pass filter, a high-pass filter, and/or a band-pass-filter.

According to one or more embodiments, the manipulated signal is determined by a control circuit, wherein the main voltage signal, the current signal, and the DC-link voltage signal are input into the control circuit, and wherein the manipulated signal is output from the control circuit. If the current signal, the main voltage signal and/or the DC-link voltage signal are filtered, the filtered current signal, the filtered main voltage signal and the filtered DC-link voltage signal, respectively, are input into the control circuit.

According to one or more embodiments, the control circuit comprises a first control unit and a second control unit, wherein the main voltage signal and the current signal are input into the first control unit, wherein the DC-link voltage signal and a first output signal of the first control unit are input into the second control unit, and wherein the manipulated signal is determined depending on a second output signal of the second control unit. If the main voltage signal and/or the current signal are filtered, the filtered main voltage signal and the filtered current signal, respectively, are input into the first control unit. If the DC-link voltage signal is filtered, the filtered DC-link voltage signal is input into the second control unit.

According to one or more embodiments, the control circuit comprises a first control unit and a second control unit, wherein the main voltage signal and the DC-link voltage signal are input into the first control unit, wherein the current signal is input into the second control unit, and wherein the manipulated signal is determined depending on a first output from the first control unit and a second output from the second control unit. If the main voltage signal and/or the DC-link voltage signal are filtered, the filtered main voltage signal and the filtered DC-link voltage signal, respectively, are input into the first control unit. If the current signal is filtered, the filtered current signal is input into the second control unit.

According to one or more embodiments, the control circuit may also comprise a node for manipulating the first and/or second output signal for determining the manipulated signal. Alternatively or additionally, the control circuit may comprise one or more controllers and/or compensators, e.g. a Pi-controller, a lead-lag compensator, etc.

According to one or more embodiments, the manipulated signal is determined depending on a predetermined and/or online-determined additional current. The additional current may be added to the output of the control circuit, e.g. to the output of the first control unit or to the output of the second control unit.

According to one or more embodiments a vehicle speed signal is received and input into the control circuit, wherein the manipulated signal is determined depending on the vehicle speed signal.

According to one or more embodiments the reference value is zero. In other words, the proposed active suppression control scheme directly controls the main current in the given frequency range to zero. Alternatively or additionally, the reference value is a minimal value and/or a frequency dependent value. At least, the reference value has to be chosen such that the amplitudes of the interference current and/or current harmonics in the given frequency range are decreased compared to the case without the direct control.

According to one or more embodiments, the vehicle comprises at least two loads connected to the DC-link and the loads are controlled such that the manipulated current is generated by a superposition of a current of one of the loads and a current of the other one of the loads. In other words, the manipulated current may be obtained by a linear combination of injected currents of the loads of the vehicle, e.g. by a linear combination of an injected current of a motor converter MC, an injected current of a voltage limiting unit VLU, an injected current of an energy storage system ESS, an injected current of an auxiliary power supply AUX, and/or an injected current of any other load of the vehicle being connected to the DC-link.

It has to be understood that features of the method as described in the above and in the following may be features of the controller, the computer program, and the computer-readable medium as described in the above and in the following.

An objective is achieved by the controller for controlling the vehicle, e.g. the DC vehicle. The vehicle comprises the current collector/pantograph for receiving the main voltage and the corresponding main current from the main voltage provider, the input filter connected to the current collector/pantograph and containing the DC-link for filtering the main current and the main voltage in order to provide a DC-link voltage, at least one load connected to the DC-link, with the controller being coupled to the current collector/pantograph, the DC-link, and the load. The controller is configured for carrying out the above method.

According to one or more embodiments, the vehicle comprises several loads, e.g. the motor converter MC, the voltage limiting unit VLU, the energy storage system ESS, the auxiliary power supply AUX, etc.

According to one or more embodiments, the controller comprises the control circuit configured for determining the manipulated signal as an output depending on the main voltage signal, the current signal, and the DC-link voltage signal. The controller may comprise one or more filters, controller and/or compensators, e.g. a low-pass filter, a high-pass filter, a band-pass filter, a Pi-controller, a lead-lag compensator, etc. If the current signal, the main voltage signal and/or the DC-link voltage signal are filtered, the filtered current signal, the filtered main voltage signal and the filtered DC-link voltage signal are the inputs for the control circuit.

According to one or more embodiments, the control circuit comprises the first control unit and the second control unit, wherein the first control unit is configured for receiving the main voltage signal and the current signal, and for outputting the first output signal depending on the main voltage signal and the current signal, and wherein the second control unit is configured for receiving the DC-link voltage signal and the first output signal of the first control unit, and for generating the second output signal, from which the manipulated signal is determined. If the main voltage signal and/or the current signal are filtered, the filtered main voltage signal and the filtered current signal, respectively, are input into the first control unit. If the DC-link voltage signal is filtered, the filtered DC-link voltage signal is input into the second control unit.

According to one or more embodiments, the control circuit comprises the first control unit and the second control unit, wherein the first control unit is configured for receiving the main voltage signal and the DC-link voltage signal, and for outputting a first output signal, wherein the second control unit is configured for receiving the current signal and for outputting a second output signal, and wherein the manipulated signal is determined depending on the first output signal and the second output signal. If the main voltage signal and/or the DC-link voltage signal are filtered, the filtered main voltage signal and the filtered DC-link voltage signal, respectively, are input into the first control unit. If the current signal is filtered, the filtered current signal is input into the second control unit.

An objective is achieved by a computer program for operating the controller for the vehicle, which, when being executed by a processor, is adapted for performing the above method.

An object is achieved by a computer-readable medium in which the above computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a block diagram schematically representing components of a conventional vehicle, e.g. a DC vehicle;

Fig. 2 shows a block diagram schematically representing components of a conventional vehicle, e.g. a DC vehicle;

Fig. 3 shows a block diagram schematically representing components of a vehicle, e.g. a DC vehicle, according to one embodiment of the present invention;

Fig. 4 shows a block diagram schematically representing components of a vehicle, e.g. a DC vehicle, according to one embodiment of the present invention;

Fig. 5 shows a block diagram schematically representing components of a vehicle, e.g. a DC vehicle, according to one embodiment of the present invention;

Fig. 6 shows a block diagram schematically representing components of a vehicle, e.g. a DC vehicle, according to one embodiment of the present invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

**Fig. 1** shows a block diagram schematically representing components of a conventional vehicle 20, e.g. a DC vehicle, as described above.

**Fig. 2** shows a block diagram schematically representing components of a conventional vehicle 20, e.g. a DC vehicle, as described above.

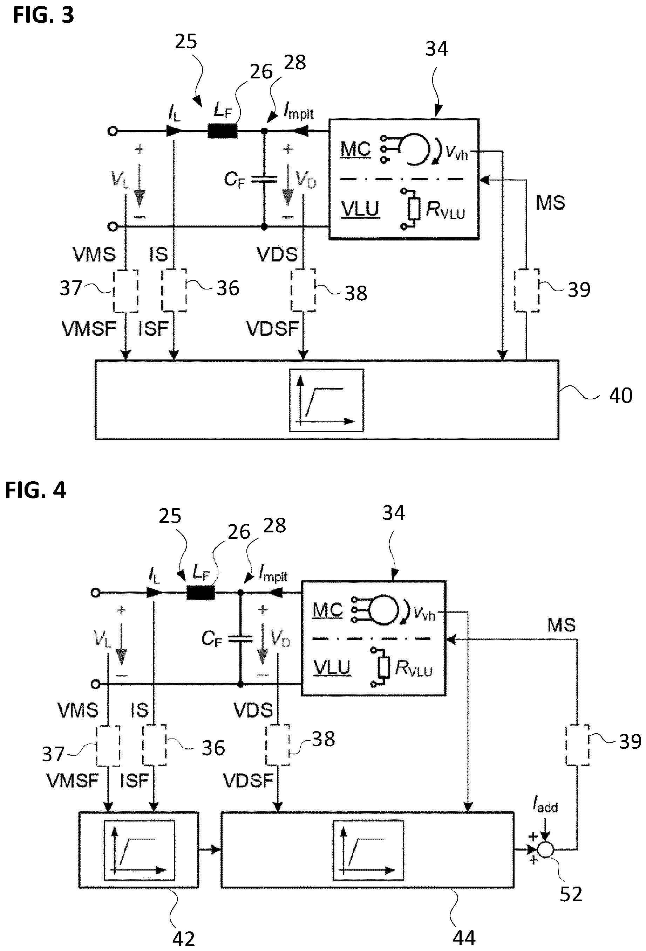

**Fig. 3** shows a block diagram schematically representing components of a vehicle 20, e.g. a DC vehicle, according to one embodiment of the present invention. The vehicle 20 according to the one embodiment of the present invention widely corresponds to the conventional vehicle 20 as described above with respect to figures 1 and 2. Therefore, only those parts, features and functions, which not already have been explained above and/or which do not correspond to the above conventional vehicle 20, are described in the following.

The voltage limiting unit VLU may comprise a VLU resistor $R_{VLU}$. The motor converter MC may provide a vehicle speed $v_{vh}$.

For controlling the vehicle 20 shown in figure 3, the main current IL, the main voltage $V_L$ and the DC-link voltage $V_D$ are measured. The corresponding measuring signals, i.e. a current signal IS, a main voltage signal VMS, and a DC-link voltage signal VDS, respectively, are dependent, e.g. identical to or linearly dependent on the main current IL, the main voltage $V_L$ and the DC-link voltage $V_D$, respectively.

The current signal IS may be filtered by a first filter 36, generating a filtered current signal ISF in a given frequency range. The main voltage signal VMS may be filtered by a second filter 37, generating a filtered main voltage signal VMSF. The DC-link voltage signal VDS may be filtered by a third filter 38, generating a filtered DC-link voltage signal VDSF. Alternatively, the current signal IS, the main voltage signal VMS, and/or the DC-link voltage signal VDS are filtered by the same filter. The first filter may be a low-pass filter, a high-pass filter or a band-pass filter. The second filter may be a low-pass filter, a high-pass filter or a band-pass filter. The third filter may be a low-pass filter, a high-pass filter or a band-pass filter. Alternatively, the current signal IS, main voltage signal VMS and/or the DC-link voltage signal VDS are not filtered.

The vehicle 20 comprises a controller. The controller comprises a control circuit 40. The controller may additionally comprise one or more control elements (not shown) of the vehicle 20 and/or the loads 34, and/or one or more further filters, controllers and/or compensators, e.g. a low-pass filter, a high-pass filter, a band-pass filter, a PI-controller, a lead-lag compensator, etc. The control circuit 40 receives the current signal IS or the filtered current signal ISF, the main voltage signal VMS, in particular the filtered main voltage signal VMSF, and/or the DC-link voltage signal VDS, in particular the filtered DC-link voltage signal VDSF, as input signals. Additionally, the control circuit 40 may receive a signal being representative for the vehicle speed $v_{vh}$. The control circuit 40 provides a manipulated signal MS as its output. A manipulated current $I_{mplt}$ is determined depending on the manipulated signal MS. The manipulated current $I_{mplt}$ may be dependent, e.g. identical to or dependent, e.g. linearly dependent, on the manipulated signal MS. The manipulated current $I_{mplt}$ is fed back to the DC-link 28 by at least one of the loads 34. Optionally, two or more of the loads 34 may be controlled such that the manipulated current $I_{mplt}$ is generated by a superposition of a current of one of the loads 34 and one or more currents of one or more of the other loads 34.

Alternatively or additionally to the filtering of the current signal IS to the given frequency range by the first filter 36, the manipulated signal MS may be filtered to the given frequency range by a fourth filter 39 and/or the manipulated current $I_{mplt}$ may be filtered to the given frequency range by a fifth filter (not shown in the figures). The fifth filter may be integrated into the load 34 and/or the input filter 25.

The manipulated signal MS or the filtered manipulated signal and thus the manipulated current $I_{mplt}$ or the filtered manipulated current are determined such that the current ripple and/or the amplitudes of the harmonics of the main current in the given frequency range are controlled to a predetermined value. The predetermined value may be a preferred low or a minimal value, and/or may be zero.

Fig. 4 shows a block diagram schematically representing components of a vehicle 20, e.g. a DC vehicle, according to one embodiment of the present invention, e.g. according to the embodiment shown in figure 3. The control circuit 40 comprises a first control unit 42 and a second control unit 44. The main voltage signal VMS, in particular the filtered main voltage signal VMSF, and the current signal IS, in particular the filtered main current signal ISF, are input into the first control unit 42. The first control unit 42 determines a first output signal depending on the main voltage signal VMS, in particular the filtered main voltage signal VMSF, and the current signal IS, in particular the filtered main current signal ISF. The DC-link voltage signal VDS, in particular the filtered DC-link voltage signal VDSF, and the first output signal of the first control unit 42 are input into the second control unit 44. Optionally, the second control unit 44 receives the vehicle speed $v_{vh}$. The second control unit 44 determines a second output signal depending on the DC-link voltage signal VDS, in particular the filtered DC-link voltage signal VDSF, and the first output signal.

The manipulated signal MS is determined depending on the second output signal. For example, the manipulated signal MS may correspond to the second output signal or may be dependent, e.g. linearly dependent, on the second output signal. Alternatively or additionally to the filtering of the current signal IS to the given frequency range by the first filter 36, the manipulated signal MS may be filtered to the given frequency range by the fourth filter 39 and/or the manipulated current $I_{mplt}$ may be filtered to the given frequency range by the fifth filter (not shown in the figures). The fifth filter may be integrated into the load 34 and/or the input filter 25.

For example, a third node 52 for adding an additional current $I_{add}$ to the second output signal is provided. The third node 52 may be implemented into the second control unit 44. The final manipulated signal MS is supplied to at least one of the loads 34.

So, the control circuit 40 consists of at least two control loops, i.e. the first control unit 42 and the second control unit 44. These control loops are arranged for the following reasons: A single control loop, e.g. the first control unit 42, employing e.g. a P-controller, may not be able to provide stability for all load characteristics (i.e. passive or active and inductive or capacitive behaviour of the load in the considered frequency range). Thus, it may be that the closed-loop system with a single control loop is unstable, e.g. at least one pole of it is located in the right-half plane of the complex s-plane (continuous case; causality, linearity and time-invariance assumed). Accordingly, the possible unstable pole(s) in the complex s-plane of the systems should be moved to the left-half plane, where the system behaves steady. This can be achieved by introducing the second control loop, i.e. the second control unit 44, for the DC-link voltage $V_D$.

The second loop can be a nested loop leading to the two-cascaded control loop shown in figure 4, where the outer loop, i.e. the first control unit 42, controls the current signal IS, in particular the filtered current signal ISF to e.g. zero and the inner control loop, i.e. the second control unit 44, regulates the DC-link voltage signal VDS or in case the filtered DC-link voltage signal VDSF to the output signal of the outer loop.

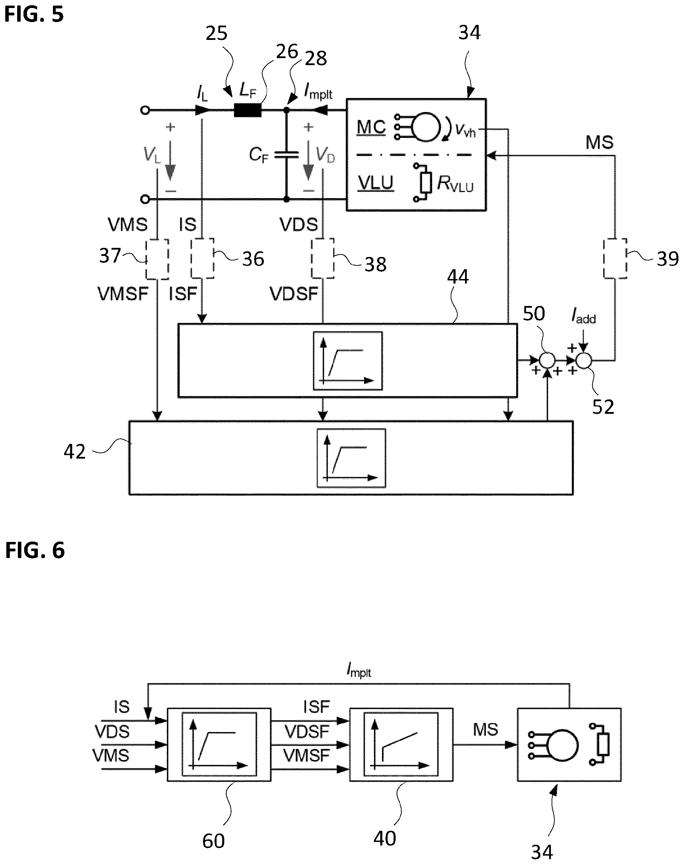

Alternatively, the second loop may be a parallel control loop resulting in two paralleled control loops, one for the current signal IS, in particular the filtered current signal ISF, i.e. the below first control unit 42, and one for the DC-link voltage signal or in case the filtered DC-link voltage signal VDSF, i.e. the below second control unit 44. This is a kind of modified state-feedback control structure and is described in the following with respect to figure 5.

**Fig. 5** shows a block diagram schematically representing components of a vehicle 20, e.g. a DC vehicle, according to one embodiment of the present invention, e.g. according to the embodiment shown in figure 3. The control circuit 40 comprises a first control unit 42 and a second control unit 44. The main voltage signal VMS, in particular the filtered main voltage signal VMSF, and the DC-link voltage signal VDS, in particular the filtered DC-link voltage signal VDSF, are input into the first control unit 42. Optionally, the first control unit 42 receives the vehicle speed $v_{vh}$. The first control unit 42 determines a first output signal depending on the main voltage signal VMS, in particular the filtered main voltage signal VMSF, on the DC-link voltage signal VDS, in particular the filtered DC-link voltage signal VDSF, and optionally on the vehicle speed $v_{vh}$. The current signal IS, in particular the filtered current signal ISF, is input into the second control unit 44. The second control unit 44 determines a second output signal depending on the current signal IS, in particular the filtered current signal ISF. For example, the current signal IS, in particular the filtered current signal ISF, is manipulated by a fixed offset and/or a fixed factor in order to generate the second output signal. The first and second output signals are added to each other at a second node 50.

The manipulated signal MS is determined depending on the first and second output signals. For example, the manipulated signal MS may correspond to the sum of the first and second output signals or may be dependent, e.g. linearly dependent, on the sum of the first and second output signals. For example, a third node 52 for adding an additional current $I_{add}$ to the sum of the first and second output signals is provided. The second and/or third node 50, 52 may be implemented into the control circuit 40, e.g. into the first or second control unit 42, 44.

Alternatively or additionally to the filtering of the current signal IS to the given frequency range by the first filter 36, the manipulated signal MS may be filtered to the given frequency range by the fourth filter 39 and/or the manipulated current $I_{mplt}$ may be filtered to the given frequency range by the fifth filter (not shown in the figures). The fifth filter may be integrated into the load 34 and/or the input filter 25.

The final manipulated signal MS, or in case the filtered manipulated signal, is supplied to at least one of the loads 34.

**Fig. 6** shows a block diagram schematically representing components of a vehicle 20, e.g. a DC vehicle, according to one embodiment of the present invention. From figure 6 may be seen that the current signal IS, the DC-link voltage signal VDS, and the main voltage signal VMS are filtered by a filter circuit 60. The filter circuit 60 may comprise the first, second, and/or third filter 36, 37, 38. The corresponding filtered current signal ISF, filtered DC-link voltage signal VDSF, and filtered main voltage signal VMSF are supplied to the control circuit 40. Depending on these filtered signals the control circuit 40 provides the manipulated signal MS. The manipulated signal MS causes one or more of the loads 34 to provide the manipulated current $I_{mplt}$ such that the main current IL is controlled to the predetermined reference value, e.g. to zero, in the given frequency range.

So, in order to guarantee the continuous operation of the vehicle 20, interference currents and/or main current harmonics in the given frequency range Δf (e.g. 0.1Hz - 1MHz, 1Hz - 100kHz, 10Hz - 10kHz) are actively suppressed by means of control. This implies representatively that $\mathcal{F}\{I_L(t)\} \to 0$ in Δf is targeted and should be enforced by the active suppression control. $\mathcal{F}\{\cdot\}$ denotes the Fourier Transformation.

The active suppression control consists of the filter circuit 60 and the control circuit 40. In order to satisfy the above equation, the main current IL is measured and the measured current signal IS is filtered resulting in ISF. Based on the filtered current signal ISF, the control circuit 40 adjusts its manipulated signal MS such that the filtered current signal ISF is regulated to zero. In order to impress/inject the desired manipulated current $I_{mplt}$ in accordance with the manipulated signal MS to the DC-link 28, the motor converter MC, the voltage limiting unit VLU, the energy storage system ESS, the auxiliary power supply AUX, or any other component acting on the DC-link 28 can be employed as actuator. This may require computing the actual current output, i.e. $I_{mplt}$, which should be impressed at the DC-link 28 by the corresponding load, from the manipulated signal MS for the purpose to control the interference currents to zero. For example, the value or signal of the current impressed by the corresponding loads at the DC-link is obtained by means of superposition to reference values or signals required for normal operation of each load. It is also possible that the manipulated current $I_{mplt}$ is composed of currents generated by different loads 34. Alternatively or additionally to the filtering of the current signal IS to the given frequency range, the manipulated signal MS may be filtered to the given frequency range and/or the manipulated current $I_{mplt}$ may be filtered to the given frequency range.

The control circuit 40 may be realized by employing the filtered DC-link voltage signal VDSF in a cascaded control scheme (see embodiment shown figure 4) or in a state-feedback like controller structure (see embodiment shown figure 5). The active suppression control can be further enhanced by employing the measured and/or filtered main voltage signal VMS as feedforward with a separate gain. The addition of a lead-lag compensator in the control circuit 40 may increase the stability margins, i.e. gain margin and/or phase margin.

The above method for controlling the vehicle 20 may be carried out by a corresponding computer program for operating the controller of the vehicle 20, when being executed by a processor. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 20 | Vehicle |
| 22 | main voltage provider |
| 24 | current collector/pantograph |
| 25 | input filter |
| 26 | filter element |
| 28 | DC-link |
| 30 | prior art filter |
| 32 | first node |
| 34 | loads |
| 36 | first filter |
| 37 | second filter |
| 38 | third filter |
| 39 | fourth filter |
| 40 | control circuit |
| 42 | first control unit |
| 44 | second control unit |
| 50 | second node |
| 52 | third node |
| 60 | filter circuit |
| MC | motor converter |
| VLU | voltage limiting unit |
| ESS | energy storage system |
| AUX | auxiliary power supply |

| | |
|---|---|
| $V_L$ | main voltage |
| $I_L$ | main current |
| $L_F$ | inductor |
| $V_D$ | DC-link voltage |
| $C_F$ | DC-link capacitor |
| $I_{MC}$ | MC current |
| $I_{VLU}$ | VLU current |
| $I_{ESS}$ | ESS current |
| $I_{AUX}$ | AUX current |
| $v_{vh}$ | Vehicle speed |
| $R_{VLU}$ | VLU resistor |
| $Y_{damp}$ | emulated damping admittance reference |
| $I_{mplt}$ | manipulated current |
| $I_{damp}$ | damping current |
| $I_{add}$ | additional current |
| DS | damping signal |
| MS | manipulated signal |
| VMS | main voltage signal |
| IS | current signal |
| VDS | DC-link voltage signal |
| VMSF | filtered main voltage signal |
| ISF | filtered current signal |
| VDSF | filtered DC-link voltage signal |

**Claims**

1. Method for controlling a vehicle (20), the vehicle (20) comprising a current collector/pantograph (24) for receiving a main voltage ($V_L$) and a corresponding main current ($I_L$) from a main voltage provider (22), an input filter (25) connected to the current collector/pantograph (24) and containing a filter element (26) and a DC-link (28) for filtering the main current ($I_L$) and/or the main voltage ($V_L$) in order to provide a DC-link voltage ($V_D$), at least one load (34) connected to the DC-link (28), and a controller coupled to the current collector (24), the DC-link (28), and the load (34), the method comprising:

   receiving a current signal (IS), which is representative for the main current ($I_L$),
   receiving a main voltage signal (VMS), which is representative for the main voltage ($V_L$);
   receiving a DC-link voltage signal (VDS), which is representative for the DC-link voltage ($V_D$);
   determining a manipulated signal (MS) depending on the current signal (IS), the main voltage signal (VMS), and the DC-link voltage signal (VDS); and
   controlling at least the one load (34) such that a manipulated current ($I_{mplt}$) depending on the manipulated signal (MS) is supplied to the DC-link (28),

   wherein the manipulated signal (MS) is determined such that in a given frequency range the main current ($I_L$) is controlled to a reference value by the manip-

ulated current ($I_{mplt}$).

2. Method in accordance with claim 1, wherein the manipulated current ($I_{mplt}$) is generated by applying a manipulated voltage to an impedance, with the manipulated voltage being manipulated in accordance with the manipulated signal (MS) and with the impedance being coupled to the DC-link (28).

3. Method in accordance with one of the preceding claims, wherein the main current ($I_L$) is controlled to the reference value in the given frequency range by filtering the current signal (IS), the manipulated current ($I_{mplt}$) and/or the manipulated signal (MS) to the given frequency range.

4. Method in accordance with one of the preceding claims, wherein the main voltage signal (VMS) is filtered; wherein the DC-link voltage signal (VDS) is filtered; and wherein the manipulated signal (MS) is determined depending on the filtered main voltage signal (VMSF), and the filtered DC-link voltage signal (VDSF).

5. Method in accordance with one of the preceding claims, wherein one, two, three, four or five elements of the group consisting of the current signal (IS), the main voltage signal (VMS), the DC-link voltage signal (VDS) the manipulated current ($I_{mplt}$) and/or the manipulated signal (MS) are filtered by a low-pass filter, a high-pass filter, and/or a band-pass-filter.

6. Method in accordance with one of the preceding claims, wherein the manipulated signal (MS) is determined by a control circuit (40) and wherein the main voltage signal (VMS) or the filtered main voltage signal (VMSF), the current signal (IS) or the filtered current signal (ISF), and the DC-link voltage signal (VDS) or the filtered DC-link voltage signal (VDSF) are input into the control circuit (40), and wherein the manipulated signal (MS) is output from the control circuit (40).

7. Method in accordance with claim 6, wherein the control circuit (40) comprises a first control unit (42) and a second control unit (44), wherein the main voltage signal (VMS) or the filtered main voltage signal (VMS), and the current signal (IS) or the filtered main current signal (ISF) are input into the first control unit (42), wherein the DC-link voltage signal (VDS) or the filtered DC-link voltage signal (VDSF) and a first output signal of the first control unit (42) are input into the second control unit (44), and wherein the manipulated signal (MS) is determined depending on a second output signal of the second control unit (44).

8. Method in accordance with claim 6, wherein the control circuit (40) comprises a first control unit (42) and a second control unit (44), wherein the main voltage signal (VMS) or the filtered main voltage signal (VMSF), and the DC-link voltage signal (VDS) or the filtered DC-link voltage signal (VDSF) are input into the first control unit (42), wherein the current signal (IS) or the filtered current signal (ISF) is input into the second control unit (44), and wherein the manipulated signal (MS) is determined depending on a first output from the first control unit (42) and a second output from the second control unit (44).

9. Method in accordance with one of claims 6 to 8, wherein the manipulated signal (MS) is determined depending on a predetermined and/or online-determined additional current ($I_{add}$).

10. Method in accordance with one of the preceding claims, wherein a vehicle speed signal ($v_{vh}$) is received and input into the control circuit (40) and wherein the manipulated signal (MS) is determined depending on the vehicle speed signal ($v_{vh}$).

11. Method in accordance with one of the preceding claims, wherein the reference value is zero.

12. Method in accordance with one of the preceding claims, wherein the vehicle (20) comprises at least two loads (34) connected to the DC-link (28) and wherein the loads (34) are controlled such that the manipulated current ($I_{mplt}$) is generated by a superposition of a current of one of the loads (34) and a current of the other one of the loads (34).

13. Controller for controlling a vehicle (20), the vehicle (20) comprising a current collector/pantograph (24) for receiving a main voltage ($V_L$) and a corresponding main current ($I_L$) from a main voltage provider (22), an input filter (25) connected to the current collector/pantograph (24) and containing a filter element (26) and a DC-link (28) for filtering the main current ($I_L$) and the main voltage ($V_L$) in order to provide a DC-link voltage (VD), at least one load (34) connected to the DC-link (28), with the controller being coupled to the current collector/pantograph (24), the DC-link (28), and the load (34) and being configured for carrying out the method in accordance with one of the preceding claims.

14. Controller in accordance with claim 13, comprising a control circuit (40) configured for determining the manipulated signal (MS) depending on the main voltage signal (VMS), the current signal (IS), and the DC-link voltage signal (VDS), and for outputting the manipulated signal (MS).

15. Controller in accordance with claim 14, the control circuit (40) comprising a first control unit (42) and a second control unit (44), wherein the first control unit (42) is configured for receiving the main voltage signal (VMS) or a filtered main voltage signal (VMSF), and the current signal (IS) or a filtered current signal (ISF), and for outputting a first output signal depending on the main voltage signal (VMS) or the filtered main voltage signal (VMSF), and the current signal (IS) or the filtered current signal (ISF), and wherein the second control unit (44) is configured for receiving the DC-link voltage signal (VDS) or a filtered DC-link voltage signal (VDSF), and the first output signal of the first control unit (42) and for generating a second output signal, from which the manipulated signal (MS) is determined, depending on the DC-link voltage signal (VDS) or the filtered DC-link voltage signal (VDSF) and the first output signal.

16. Controller in accordance with claim 14, the control circuit (40) comprising a first control unit (42) and a second control unit (44), wherein the first control unit (42) is configured for receiving the main voltage signal (VMS) or a filtered main voltage signal (VMS), and the DC-link voltage signal (VDS) or a filtered DC-link voltage signal (VDSF), and for outputting a first output signal depending on the main voltage signal (VMS) or the filtered main voltage signal (VMS), and the DC-link voltage signal (VDS) or the filtered DC-link voltage signal (VDSF), wherein the second control unit (44) is configured for receiving the current signal (IS) or a filtered current signal (ISF) and for outputting a second output signal depending on the current signal (IS) or the filtered current signal (ISF), and wherein the manipulated signal (MS) is determined depending on the first output signal and the second output signal.

17. A computer program for operating a controller for a vehicle (20), which, when being executed by a processor, is adapted for performing the method of one of claims 1 to 9.

18. A computer-readable medium in which a computer program according to claim 14 is stored.

**FIG. 1**

< prior art >

**FIG. 2**

< prior art >

EP 4 079 562 A1

# FIG. 3

# FIG. 4

12

**FIG. 5**

**FIG. 6**

Europäisches Patentamt

European Patent Office

Office européen des brevets

## EUROPEAN SEARCH REPORT

Application Number

EP 21 16 9120

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 059 924 A1 (HITACHI LTD [JP]) 15 September 1982 (1982-09-15) * page 7, lines 4-13; figures 1,5,8 * * page 7, line 28 - page 8, line 5 * * page 8, line 16 - page 9, line 13 * * page 11, line 16 - page 12, line 20 * | 1-18 | INV. B60L9/00 B60L9/04 B60L9/18 H02M1/14 |
| X | EP 3 675 339 A1 (YAZAKI CORP [JP]) 1 July 2020 (2020-07-01) * paragraphs [0040] - [0047]; figures 1-3 * | 1-18 | |
| X | JP 2004 104976 A (TOSHIBA CORP) 2 April 2004 (2004-04-02) * the whole document * | 1-18 | |
| X | US 2002/141212 A1 (ISHIDA SEIJI [JP] ET AL) 3 October 2002 (2002-10-03) * paragraphs [0052] - [0136]; figures 1,2,6,7,9 * | 1-18 | |
| | | | TECHNICAL FIELDS SEARCHED (IPC) |
| | | | B60L H02M |

The present search report has been drawn up for all claims

| Place of search | Date of completion of the search | Examiner |
|---|---|---|
| The Hague | 4 October 2021 | Bellatalla, Filippo |

EPO FORM 1503 03.82 (P04C01)

## ANNEX TO THE EUROPEAN SEARCH REPORT
## ON EUROPEAN PATENT APPLICATION NO.

EP 21 16 9120

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2021

| Patent document cited in search report | | Publication date | Patent family member(s) | | Publication date |
|---|---|---|---|---|---|
| EP 0059924 | A1 | 15-09-1982 | EP 0059924 A1 | | 15-09-1982 |
| | | | JP H0313802 B2 | | 25-02-1991 |
| | | | JP S57145503 A | | 08-09-1982 |
| EP 3675339 | A1 | 01-07-2020 | CN 111384859 A | | 07-07-2020 |
| | | | EP 3675339 A1 | | 01-07-2020 |
| | | | JP 2020108236 A | | 09-07-2020 |
| | | | US 2020212815 A1 | | 02-07-2020 |
| JP 2004104976 | A | 02-04-2004 | NONE | | |
| US 2002141212 | A1 | 03-10-2002 | JP 4013483 B2 | | 28-11-2007 |
| | | | JP 2002238298 A | | 23-08-2002 |
| | | | US 2002141212 A1 | | 03-10-2002 |

EPO FORM P0459

For more details about this annex : see Official Journal of the European Patent Office, No. 12/82